# EUROPEAN PATENT APPLICATION

(11) **EP 1 621 071 A1**
(43) Date of publication of application: **01.02.2006**
(21) Application number: 05254635.5
(22) Date of filing: 26.07.2005
(51) Int. Cl.: A01G 13/02

(54) **Sheeting**

(30) Priority: 30.07.2004 GB 0417033
(71) Applicant: DON & LOW LIMITED, Forfar, Angus DD8 1FR, Scotland (GB)
(72) Inventor: Avril, David c/o Don & Low Limited, Angus DD8 1FR Scotland (GB); Seddon, Mark c/o Don & Low Limited, Angus DD8 1FR Scotland (GB); Filmer, Kelly c/o Don & Low Limited, Angus DD8 1FR Scotland (GB); Wilkie, Michael c/o Don & Low Limited, Angus DD8 1FR Scotland (GB)
(74) Representative: Moreland, David

(57) **Abstract**

There is disclosed an anti-fouling and/or anti-microbial sheeting, e.g. for use as a horticultural or agricultural cover. Ground cover material is placed over soil on a greenhouse floor or the like, and pots of young plants are set at intervals on the cover. Surplus water gathering on the cover can lead to the formation of algae and other bacterial and fungal growths, liverwort and slime, on the cover. Accordingly, the invention provides a sheeting wherein at least a part of the sheeting has anti-fouling and/or anti-microbial properties or anti-fouling and/or anti-microbial means. The sheeting typically comprises a single layer, or may comprise several layers, the layer or layers each comprising a woven or non-woven polymeric or plastics fabric layer. The anti-fouling means may be integral to the sheeting material, for example, chemically bound to the sheeting material, and/or dispersed within the sheeting material, or may comprise a topical layer on the sheeting surface.

## Description

### FIELD OF INVENTION

The present invention relates to anti-fouling and/or anti-microbial sheeting, and in particular, though not exclusively, to anti-fouling and/or anti-microbial ground or surface covers.

### BACKGROUND TO INVENTION

Ground cover material is used in the horticultural industry as a weed suppressant when growing young plants in greenhouses and polytunnels. The ground cover material is placed over the soil on the greenhouse floor and pots of young plants are set at intervals along the ground cover. Common products used for this include perforated polythene sheeting, woven or non-woven polyolefin fabrics and polyester based fabrics.

Surplus water gathering from watering the young plants can lead to small pools of water sitting on the material surface. This can lead to the formation of algae and other bacterial and fungal growths, including liverwort and slime, on the ground cover. It is preferable that the ground cover is kept clean from a visual perspective and remains free of bacteria and fungus, which could have a detrimental effect on plant development. Various means of removing these contaminants include hosing down, scrubbing or treatment with a suitable anti-microbial wash. The methods used are labour intensive, as the plants must be removed before cleaning the cover and the cleaning must be carried out regularly to ensure the groundcover remains clean. Reduction or elimination of growth is therefore desired to minimise cleaning regimes.

An object of the present invention is to seek to obviate and/or mitigate the above-mentioned disadvantages.

It is a further object of at least one embodiment of at least one aspect of the present invention to provide a polyolefin woven or nonwoven product, such as a ground cover, for the horticultural and/or agricultural industry having an anti-microbial and/or anti-fungal additive. Such additive can reduce or eliminate the growth of algae and/or other related contaminants on the surface of the cover.

### SUMMARY OF INVENTION

According to a first aspect of the present invention there is provided a sheeting wherein at least a part of the sheeting has anti-fouling and/or anti-microbial properties or anti-fouling and/or anti-microbial means.

The term anti-fouling refers to the ability of the sheeting to substantially prevent or inhibit the growth of organisms on the sheeting such as on the surface of the sheeting. Particular organisms in this regard include algae, fungi, bacteria, liverworts, lichens or the like.

By preventing or inhibiting the growth of organisms, the appearance, build up or formation of such things as slime and mildew can be reduced or prevented.

The sheeting may be put to any use where anti-fouling properties are desirable.

Particularly suitable uses include ground or surface covers such as horticultural covers, for example, for use preferably in greenhouses or alternatively garden centres, plant wholesale or retail premises, warehouses, gardens, domestic gardens or the like. Alternative uses include agricultural covers; polytunnels; geotextiles; housewrap; roofing products such as roofing underlay sheeting; tarpaulins; tent or temporary shelter fabric; and advantageously in floor coverings such as carpets, e.g. carpet backing.

The sheeting may comprise a single layer or may comprise several layers, for example, to form a laminated sheeting.

The layer or layers may each comprise a woven or non-woven fabric layer.

Non-woven fabric layers may comprise those formed preferably by a spun-bonded method, or alternatively, by melt-blown or flash-spun methods or the like.

The sheeting may desirably be opaque. This is advantageous when used as a ground cover for weed suppression.

The sheeting may be formed from any suitable material commonly used for making sheeting products.

Particularly, suitable materials include polymeric or plastics materials such as polyesters or polyolefins.

Suitable polyolefins are polypropylene and polyethylene. Polypropylene is most preferred.

The polymeric or plastic materials may optionally include one or more processing agents and/or other additive materials such as clays, calcium carbonate, minerals, anti-static agents, ultra-violet light degradation stabilisation agents, heat stabilizers, fragrances, colourants or pigments and the like.

The sheeting may comprise an anti-fouling substance or means, which may be integral to the sheeting material, for example, chemically bound to the sheeting material, and/or may be dispersed within the sheeting material.

Alternatively, the anti-fouling substance may comprise a topical layer adhered to the sheeting surface.

Additionally, if dispersed within the sheeting material, the anti-fouling substance may be dispersed throughout the material in a substantially homogeneous dispersion or may be located at or near an outer surface of the sheeting or of a material of which the sheeting is comprised.

For example, a sheeting comprising a polymeric or plastic material may have the anti-fouling substance dispersed therein by mixing the molten polymer/plastic with the anti-fouling substance prior to melt extrusion.

It may be desirable to add the anti-fouling substance as a master-batch to aid uniform distribution of the anti-fouling substance within the polymer melt.

The anti-fouling substance may be an organic or inorganic chemical substance.

An inorganic chemical substance is most preferred.

Organic substances comprise or include anti-microbial substances such as chorinated diphenyl ether compounds such as the product obtainable under the trade mark Triclosan® and which has the formula:

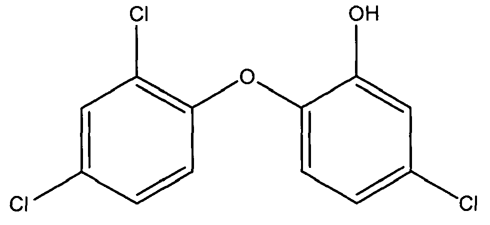

Beneficially, inorganic substances comprise or include those based on silver and/or titanium and/or copper. A compound such as silver chloride may be utilised, optionally together with a titanium compound and/or copper forming a silver chloride/titanium and/or copper composite.

Typically the silver-based anti-fouling substance may be provided as a silver chloride/titanium dioxide composite particle comprising a silver chloride coating on a titanium dioxide particle(s) within which a saturated solution of silver chloride may form.

The titanium dioxide is preferably in the rutile form.

Preferably, the particle(s) comprises a sponge of sintered titanium dioxide, preferably sintered rutile titanium dioxide.

Additionally, the silver anti-fouling substance may optionally be provided in a formulation comprising an aqueous sulphosuccinate gel which may enhance the silver ion penetration of microbial cell walls and hence increase the anti-microbial properties of the anti-fouling substance.

The particle size typically ranges from 1 µm to 3 µm in diameter.

Alternatively, the inorganic anti-fouling substance is provided as a copper-containing glass matrix which is preferably a copper and silver-containing glass matrix.

The glass matrix may be advantageously provided in particulate form and may be provided as a masterbatch for example for uniform dispersion within a polymer melt during moulding or extrusion.

Without wishing to be bound by any particular theory, it is believed that copper ions (Cu²⁺) and/or silver ions (Ag⁺) are released from the polymer incorporating the glass matrix particles on contact with water and the released ions contact and kill bacteria, algae and fungi. The released ions may also bind to the polymer surface prior to contacting bacterial, algal or fungal cells.

Preferably, the anti-fouling substance should be effective against algae, bacteria and fungus, and also possibly against yeasts and moulds.

For example typical bacteria may include Enterobacter gergoviae, Pseudomonas cepacia, E coli, Pseudomonas mirabalis, Pseudomonas aeruginosa, Staphylococcus aureus and Pseudomonas putida.

Typical yeasts may include Candida albicans and Saccharomyes cerevisiae.

Typical moulds may include Mucor racemosu, Myceliephthera thermophilia, Penicillium chrysogenum, Aspergillus niger, Aspergillus nidulans and Aspergillus amsterloclami.

Preferably, the anti-fouling substance does not substantially leach out of the resultant sheeting.

Preferably the anti-fouling substance and/or the sheeting in which the substance is incorporated is suitable for food contact or conforms to the standards required for materials in food contact.

Other desirable features of the anti-fouling substance include that it preferably does not substantially cause skin irritation or other dermal problems.

Advantageously, the anti-fouling substance is preferably substantially thermally stable at generally used polymer processing temperatures.

Addition of the anti-fouling substance as a masterbatch to facilitate good dispersion in the polymer melt during an extrusion process is further desirable.

The masterbatch generally comprises as a minimum the anti-fouling substance combined with a carrier polymer and is typically provided in pellet form for adding to the bulk polymer prior to extrusion.

The masterbatch may also contain other additive substances for addition to the polymer melt such as, for example, pigments, ultra-violet light stabilisers, hydrophilic additives etc.

Preferably, the carrier polymer used in the masterbatch is of substantially the same type as the bulk polymer used to form the sheeting material. This enables the masterbatch to uniformly mix with the sheeting material polymer.

The amount of masterbatch combined with polymer is chosen to provide a desired final concentration of the anti-fouling substance in the extruded polymer from which the sheeting is comprised.

The amount of masterbatch chosen may also depend on the concentration of anti-fouling substance present in the masterbatch carrier polymer. For example the anti-fouling substance may comprise 20 wt% of the masterbatch, with 80 wt% being carrier polymer.

Typically the amount of masterbatch used may be between about 1 wt% and 5 wt% of the total bulk polymer/masterbatch mixture, to provide a final concentration of anti-fouling substance in the extruded polymer of about 0.01 wt% to 1.0 wt%.

Preferably, the masterbatch is added at substantially 1.0 wt% of the total bulk polymer/masterbatch mixture.

Preferably the final concentration of the anti-fouling substance in the extruded polymer is substantially 0.2 wt%.

The above amounts of masterbatch and anti-fouling substance concentration may be easily varied to alter the degree of anti-fouling effect required in the sheeting.

Without wishing to be bound by any particular theory it is believed that the silver-based anti-fouling substance operates by setting up an equilibrium, which allows the release of silver ions (Ag⁺) into an aqueous medium. This facilitates a constant release of silver, but only when in contact with microbes and other fouling organisms. Because of this mechanism it is believed that the anti-fouling sheeting generally retains longevity of active anti-fouling use and durability.

According to a second aspect of the present invention there is provided use of a sheeting according to the first aspect as a horticultural cover, agricultural cover, ground cover or floor covering. Other beneficial uses are listed hereinbefore.

According to a third aspect of the present invention there is provided a method of making a sheeting, said method comprising the steps of:
(a) providing a material;
(b) forming said material into a sheeting;
(c) providing said material with anti-fouling and/or anti-microbial means.

The material preferably comprises a polymer material. Step (c) may be taken before step (b). In such case, step (c) may comprise incorporating into the material an anti-fouling substance prior to or during melt extrusion of the material. Alternatively, in such case step (c) may comprise applying a topical coating to threads, yarns or tapes of the material.

Alternatively, step (c) may be taken after step (b). In such case an anti-fouling substance may be applied topically to a surface of the sheeting.

According to a fourth aspect of the present invention there is provided a method of making a sheeting according to the first aspect, said method comprising providing a polymer material and incorporating into the polymer material an anti-fouling and/or anti-microbial substance prior to or during melt extrusion of the polymer material.

Extrusion may provide filaments of polymer for forming non-woven sheeting material or may provide tapes for weaving into woven sheeting material.

Alternatively, the anti-fouling and/or anti-microbial substance may be applied topically to the surface of an already formed sheeting of polymer material or applied to the components of such sheeting before forming the sheeting.

For example, the anti-fouling and/or anti-microbial substance may be incorporated into or topically applied to the surface of polymer tapes prior to weaving the tapes to form a sheeting.

### BRIEF DESCRIPTION OF DRAWINGS

Embodiments of the present invention will now be described, by way of example, and with reference to the drawings, which are:
- **Figure 1**: a schematic diagram showing a polymer tape manufacturing process according to a first embodiment of the present invention;
- **Figure 2**: a schematic diagram showing an alternative polymer tape manufacturing process according to a second embodiment of the present invention;
- **Figure 3**: schematic diagram showing a spunbond manufacturing process according to a third embodiment of the present invention;
- **Figure 4**: a top view of a typical woven fabric construction according to the present invention;
- **Figure 5**: a graph detailing antifungal activity of several spunbond fabrics according to the present invention;
- **Figure 6**: a schematic diagram showing application of an anti-fouling substance by a lick roll method according to an alternative embodiment of the present invention; and
- **Figure 7**: a schematic diagram showing application of an anti-fouling substance by a padding method according to a further alternative method according to the present invention.

### DETAILED DESCRIPTION OF DRAWINGS

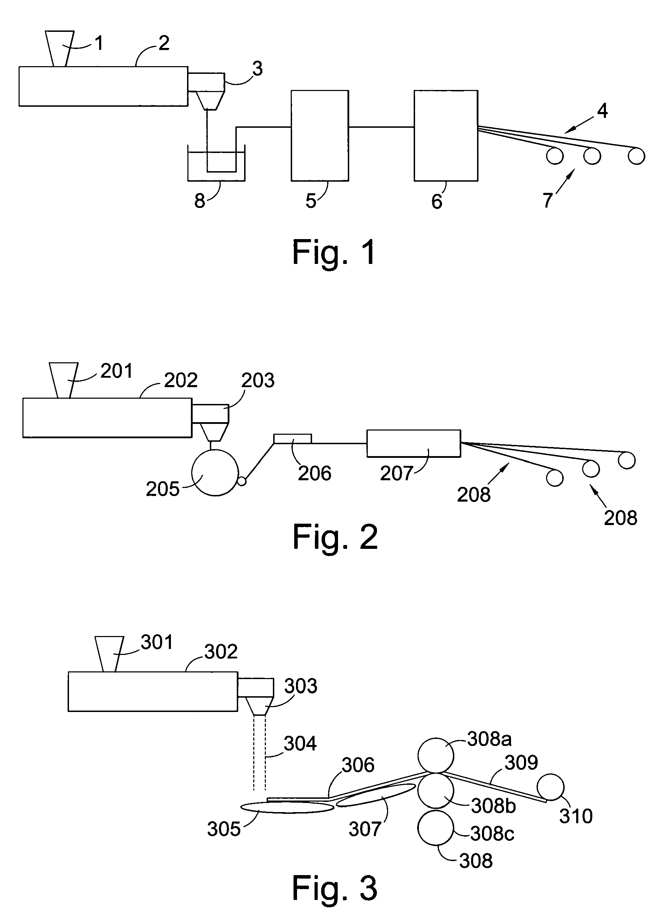

Referring initially to Figures 1 and 2, in the case of a woven fabric according to embodiments of the present invention, tapes are manufactured either by a spinneret (Figure 1) or a slit film process (Figure 2).

In either case a suitable anti-fouling additive included as a masterbatch is added to the base polymer in a feed hopper 1;201. The anti-fouling additive in this case comprises an inorganic substance based on a silver compound such as silver chloride, e.g. JMAC™ available from AddMaster(UK) Limited which is a silver chloride/titanium dioxide composite comprising a silver chloride coating on a titanium dioxide particle. The titanium dioxide is a sponge of sintered rutile titanium dioxide. Alternatively, a silver-based compound available under the trade name BACTiglas™ available from Wells Plastics Limited can be used which is a particulate material, the particles being made of a copper and silver-containing glass matrix. The blend, which may also contain other additives such as, for example, pigments, ultra-violet light stabilisers, hydrophilic additives etc., is fed into an extruder 2;202. The blend is melted, fed through a die 3;203, to form individual tapes (spinneret process) or a film (slit film process) 4;204. The resulting tapes or film are solidified quickly by quenching, using either a water bath (spinneret) or a chill roll or water bath (slit film) 5;205. Spinneret tapes are passed through an accumulator 6, whilst film is slit to form tapes by film slitting means 206. In both processes the tapes are heated, oriented, annealed and cooled in an orientation/annealing oven 7;207, then wound on to spools 8;208 for weaving.

Spools 8;208 are then woven into a fabric using conventional weaving equipment for flat tapes. The anti-fouling additive may be in the warp (machine direction), weft (cross direction) or both.

Details of the preferred counts of weaving tapes and preferred fabric constructions are given below. The tape counts are given in tex, which is defined as the weight in grams of 1000 metres of tape. These dimensions are not limiting, and may be tailored to suit individual requirements.

In one embodiment of the invention the warp tapes may have a linear density of 10 to 300 tex, preferably 20 to 100 tex and most preferably 30 to 60 tex. The linear density of the weft tapes may have a linear density of 10 to 300 tex, preferably 20 to 100 tex and most preferably 30 to 60 tex.

In one embodiment of the invention the warp tape count may be 8 to 250 tapes / 10 cms, preferably 80 to 140 tapes / 10 cms, and most preferably 94 to 124 tapes /10 cms. The weft tape count may be 8 to 100 tapes / 10 cms, preferably 25 to 80 tapes / 10 cms, and most preferably 35 to 70 tapes / 10 cms.

The anti-fouling additive may be included in some or all of the tapes, depending on the degree of anti-fouling action required. The addition rate of anti-fouling additive may also be varied depending on the degree of anti-fouling action required.

Tapes are then woven into a ground cover fabric using conventional flat tape weaving equipment.

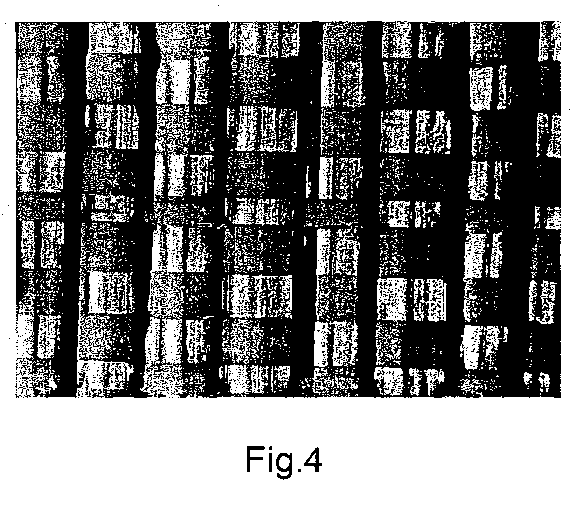

A typical woven construction is shown in Figure 4. During the weaving process, coloured marker tapes beneficially containing anti-fouling additive may be introduced into the machine and/or cross direction. Such tapes may allow accurate positioning of plant containers along or upon the ground cover fabric, in use.

Alternatively the ground cover fabric may be made using a non-woven process, particularly a process known as spunbonding or spinbonding. A spunbonding process known under the trade mark Reicofil® is shown in Figure 3 and is described below.

In one embodiment of the invention the non-woven fabric weight is between 15 and 150 grams per square metre, preferably between 30 and 70 grams per square metre, and most preferably between 40 and 60 grams per square metre.

In this implementation the anti-microbial additive is incorporated in the polymer melt prior to extrusion. A suitable anti-fouling additive, again such as JMAC™, is added to the base polymer in feed hopper 301. The blend, which may also contain other additives such as, for example, pigments, ultra-violet stabilisers, hydrophilic additives etc., is fed in to the extruder 302. The blend is melted and fed through a spinning beam 303. The resultant filaments are solidified and formed into a web in channel 304. Unbonded web 306 drops on to a spin belt 305, and passes by means of a conveyor belt 307 through a calender 308. The calender 308 comprises a heated smooth bowl 308b, and a heated embossing bowl 308a (e.g. having a 19% embossing area with a diamond embossing pattern). The calendering process bonds the web at embossing points or islands in discrete areas only, allowing the resulting product to have a fabric like texture, whilst imparting good tensile and tearing properties. A choice of embossing patterns is possible by fitting a second embossing bowl 308c (e.g. having a 7½% embossing area with a round embossing pattern), and changing the path of the web through the calender 308. Resulting fabric 309 is wound on to a core on wind up roller 310. Marker lines to allow positioning of plant containers may be printed onto the resultant sheeting in a post production operation.

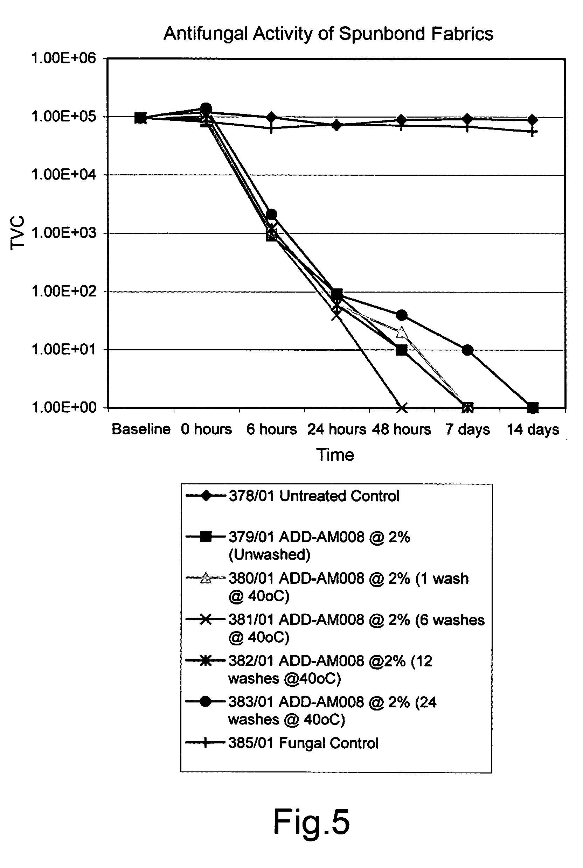

The effectiveness of the sheeting product of the present invention as an anti-microbial is shown in Figure 5. Sheeting or fabric was tested in accordance with the 'Shake Flask' method for determination of anti-microbial activity on a sample of typical non-woven sheeting fabric. In this test the fabric is exposed to a bacterial inoculum of S. aureus and E. Coli, and fungal component, A. Niger. Figure 5 shows the determination of Total Viable Counts (TVC) against time, to estimate the antimicrobial /antifungal activity of the fabric samples. Fabric samples contained 2% masterbatch. The fabric samples were washed up to 24 times, and the graph illustrates the effect of washing on antimicrobial/antifungal activity. The addition rate of the additive during the spunbond manufacture can be increased or decreased to meet particular requirements.

As an alternative to a melt additive, the woven or non-woven fabric may be treated with a topical application of the antibacterial/antifungal agent or additive. This may be by lick roll or padding methods.

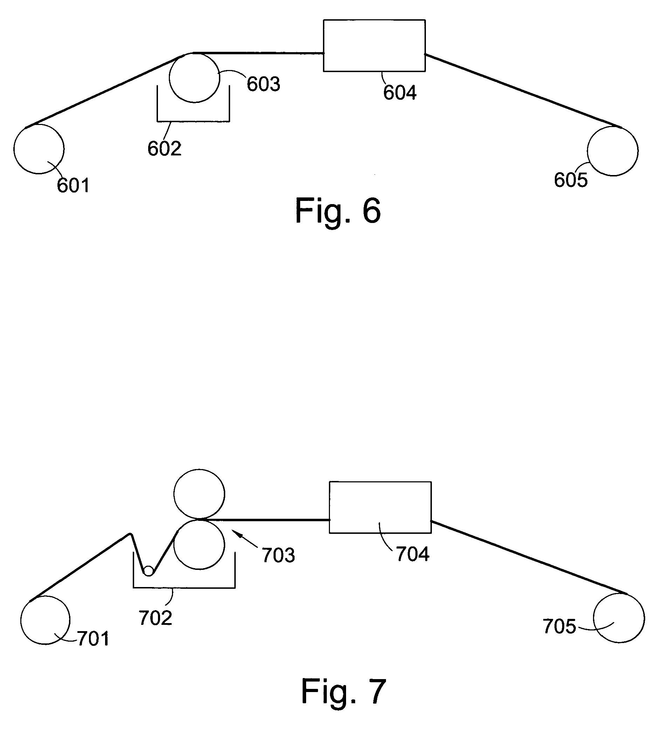

Figure 6 illustrates lick roll application. A lick roll 603, picks up a solution of the additive from a tank 602. A roll of fabric is unwound from a stand 601, passes over the lick roll and is coated with the required quantity of solution. The coated fabric passes through a drying oven 604, and is rewound on stand 605.

Figure 7 illustrates a padding process. A roll of fabric is unwound from a stand 701 and is fed through a tank 702, containing a solution of the additive. The fabric then passes through a padding mangle 703 which removes excess liquid. The fabric passes through a drying oven 704 and is rewound on stand 705.

In the lick roll application one side only of the fabric is coated. In the padding process, both sides are coated.

It will be appreciated that the embodiments of the invention hereinbefore described are given by way of example only, and are not meant to be limiting of the scope of the invention in any way.

## Claims

1. A sheeting wherein at least a part of the sheeting has anti-fouling and/or anti-microbial properties or anti-fouling and/or anti-microbial means.

2. A sheeting as claimed in claim 1, wherein the sheeting is adapted for use as a ground or surface cover.

3. A sheeting as claimed in either of claims 1 or 2, wherein the sheeting is adapted for use as a horticultural or agricultural cover.

4. A sheeting as claimed in claim 1, wherein the sheeting is adapted for use as at least part of a polytunnel; a geotextile; a housewrap; a roofing product; a roofing underlay sheeting; a tarpaulin; tent or temporary shelter fabric.

5. A sheeting as claimed in claim 1, wherein the sheeting is adapted for use as at least part of a floor covering or a carpet backing.

6. A sheeting as claimed in any of claims 1 to 5, wherein the sheeting comprises a single layer or a plurality of layers, the or each of which comprise a woven or non-woven fabric layer.

7. A sheeting as claimed in claim 6, wherein the or each non-woven fabric layer is formed by a spun-bonded method or by a melt-blown or flash-spun method.

8. A sheeting as claimed in any of claims 1 to 7, wherein the sheeting is substantially opaque.

9. A sheeting as claimed in any of claims 1 to 7, wherein the sheeting is formed from a polymeric or plastics material.

10. A sheeting as claimed in claim 9, wherein the polymeric or plastics material is selected from polyesters or polyolefins.

11. A sheeting as claimed in claim 10, wherein the polyolefin is polypropylene or polyethylene.

12. A sheeting as claimed in any of claims 9 to 11, wherein the polymeric or plastic materials includes one or more processing agents and/or other additive materials selected from clays, calcium carbonate, minerals, anti-static agents, ultra-violet light degradation stabilisation agents, heat stabilizers, fragrances, colourants, pigments or hydrophilic additives.

13. A sheeting as claimed in any of claims 1 to 12, wherein the sheeting comprises an anti-fouling substance or means which is integral to the sheeting material, and/or dispersed within the sheeting material, and/or comprises a topical layer provided on a surface of the sheeting.

14. A sheeting as claimed in claim 13 when dependent upon any of claims 10 to 12, wherein the anti-fouling substance is dispersed in the polymeric or plastic material by mixing the molten polymer/plastic with the anti-fouling substance prior to melt extrusion.

15. A sheeting as claimed in claim 14, wherein the anti-fouling substance is added as a master-batch to aid uniform distribution of the anti-fouling substance within the polymer or plastics melt.

16. A sheeting as claimed in any of claims 1 to 15, wherein the anti-fouling means is be organic or inorganic chemical substance.

17. A sheeting as claimed in claim 16, wherein the organic substance is an anti-microbial substance comprising a chlorinated diphenyl ether compound.

18. A sheeting as claimed in claim 16, wherein the inorganic substance is based on silver and/or titanium and/or copper.

19. A sheeting as claimed in claim 18, wherein the inorganic substance comprises silver chloride, optionally together with a titanium compound and/or copper forming a silver chloride/titanium and/or copper composite.

20. A sheeting as claimed in either of claims 18 or 19, wherein the silver-based anti-fouling substance is provided as silver chloride/titanium dioxide composite particles, each composite particle comprising a silver chloride coating on a titanium dioxide particle within which a saturated solution of silver chloride is formed.

21. A sheeting as claimed in claim 20, wherein each particle comprises a sponge of sintered titanium dioxide, such as sintered rutile titanium dioxide.

22. A sheeting as claimed in any of claims 18 to 21, wherein the silver anti-fouling substance is provided in a formulation comprising an aqueous sulphosuccinate gel.

23. A sheeting as claimed in either of claims 20 or 21, wherein the particle size typically ranges from 1 µm to 3 µm in diameter.

24. A sheeting as claimed in claim 18, wherein the inorganic anti-fouling substance is provided as a copper-containing glass matrix.

25. A sheeting as claimed in clam 24, wherein the glass matrix is provided in particulate form as a masterbatch for uniform dispersion within a polymer melt during moulding or extrusion.

26. A sheeting as claimed in claim 9 or any of claims 10 to 25 when dependent upon claim 9, wherein a concentration of the anti-fouling means in the polymeric or plastics material is around 0.2 wt%.

27. Use of a sheeting according to any of claims 1 to 26 as a horticultural cover, agricultural cover, ground cover or floor covering.

28. A method of making a sheeting, said method comprising the steps of:
(a) providing a material;
(b) forming said material into a sheeting;
(c) providing said material with anti-fouling and/or anti-microbial means.

29. A method as claimed in claim 28, wherein the material comprises a polymer material.

30. A method as claimed in either of claims 28 or 29, wherein step (c) is taken before step (b), step (c) optionally comprising incorporating into the material an anti-fouling substance prior to or during melt extrusion of the material, or comprising applying a topical coating to threads, yarns or tapes of the material.

31. A method as claimed in either of claims 28 or 29, wherein step (c) is taken after step (b), step (c) optionally comprising applying a topical coating to a surface of the sheeting.

32. A method of making threads, yarns or tapes, said method comprising providing a polymer material and incorporating into the polymer material an anti-fouling and/or anti-microbial substance prior to or during melt extrusion of the polymer material.
